# EUROPEAN PATENT APPLICATION

(11) **EP 4 790 396 A1**
(43) Date of publication of application: **12.08.2026**
(21) Application number: 26157007.1
(22) Date of filing: 06.02.2026
(51) Int. Cl.: G01N 23/046

(54) **HIGH RESOLUTION COMPUTED TOMOGRAPHY USING COMPUCENTRIC ROTATIONAL AXIS**

(30) Priority: 11.02.2025 US 202519050561
(71) Applicant: Carl Zeiss X-Ray Microscopy, Inc., Dublin, California 94568 (US)
(72) Inventor: XU, Shiqi, Dublin, CA, 94568 (US); ANDREW, Matthew, Dublin, CA, 94568 (US); KRAMPERT, Gerhard, Dublin, CA, 94568 (US); SMYTH, Brian, Dublin, CA, 94568 (US); EDQUILANG, Bernard, Dublin, CA, 94568 (US); YANG, Faguo, Dublin, CA, 94568 (US)
(74) Representative: Gulde & Partner

(57) **Abstract**

A high-resolution computed tomography technique employs a "compucentric" rotational axis to keep the region of interest, ROI, centered in the detector's field of view at all angles. The system calibrates mechanical and optical misalignments by capturing projections of a high-contrast object at multiple positions. The resulting geometry model, including stage runout and thermal drift corrections, is then applied to the sample of interest. Each projection view is associated with specific positioning parameters, ensuring accurate data registration for reconstruction. By using a virtual rotation axis and per-view geometry descriptors, the method produces superior resolution and fewer artifacts than tomography created from misaligned systems, and involves less labor than conventional physical alignment techniques.

## Description

### FIELD OF THE DISCLOSURE

Embodiments of the present disclosure relate to the fields of computed tomography and X-ray imaging.

### TECHNOLOGICAL BACKGROUND

X-ray microscopy is an imaging technique that allows for the visualization of a sample's internal structure without the need for destructive sectioning. This technique uses X-rays to create high-resolution images or projections of the sample. These images can be used to study a wide range of materials, from biological tissues to geological samples and man-made materials, at a much higher resolution than is achievable with classical microscopy computed tomography, and significantly better penetration depth than traditional light microscopy, if required.

In an X-ray microscope, the sample is illuminated with an X-ray beam, and the transmitted X-rays are captured to form the projection. The X-ray beam is often produced by a synchrotron radiation source or a laboratory X-ray source. The beam is then conditioned to suppress unwanted energies or wavelengths of radiation to ensure high-quality imaging in many cases. As the X-ray beam passes through the sample, its intensity is modulated according to the sample's internal structure and composition. This modulated beam is then detected by a detector system, which converts the X-rays into an image that can be analyzed.

Tomographic reconstruction transforms the collected X-ray projections into a three-dimensional representation of the sample. The reconstruction process involves mathematical algorithms. The most commonly used reconstruction algorithms fall into a class of reconstruction techniques termed analytical reconstruction. The objective is to find a closed-form solution to the problem of reconstructing an object's internal structure from its projections. The most common analytical method is filtered back projection (FBP). The projections are first processed using a high-pass filter, usually a ramp filter, in the frequency or space domain. Then, each filtered projection is "smeared" back onto the imaging plane as if each data point emits back in the shape of the original beam. These back projections from all angles are summed up to produce the reconstructed volume, which approximates the object's internal structure. The filtering and back projection operations collectively help in obtaining a more accurate and less blurred reconstruction of the original object. One type of filtered back projection is the FDK algorithm. It is used often with X-ray micro tomography systems since it reduces artifacts associated with the typical cone-shaped beam that is characteristic of laboratory X-ray sources; see Feldkamp, L.A., Davis, L.C. and Kress, J.W. (1984), Practical Cone-Beam Algorithm, Journal of the Optical Society of America A, 1, 612-619.

In X-ray microscopic tomography systems, accurate tomographic reconstructions depend on proper system alignment, mechanical stability, and calibration. These factors ensure that the projection data accurately represents the object, minimizing errors introduced by the system itself.

Physical alignment determines the geometric relationship between the X-ray source, object, and detector. To a first order, physical alignment is achieved with painstaking and time-consuming alignment steps done by skilled operators. Misalignment can cause distortions or shifts in the projection data, leading to errors in the reconstructed image. Mechanical stability is also critical for the object's rotation mechanism, as deviations such as wobbling or backlash during rotation introduce artifacts into the projections, degrading reconstruction quality.

Calibration addresses these imperfections by characterizing the system geometry, including the source position, detector alignment, and rotational axis. This allows for corrections during reconstruction to compensate for mechanical or alignment errors, improving accuracy.

In addition or instead of physically aligning the system, one can also estimate the misalignments, and try to compensate in the reconstruction, which usually gives better reconstruction image quality compared with the reconstruction using mis-estimated (incorrectly estimated) geometries. Advanced reconstruction frameworks or algorithms are available that are capable of addressing complex challenges in image reconstruction. Some of these algorithms have the ability to dynamically adjust for system-specific deviations between projection views, including mechanical misalignments, rotational axis errors, and nonlinearities, based on calibration or projection specific data. Some have the capability to handle projections of varying resolutions or scales to optimize for specific imaging goals, such as resolving fine details while maintaining a broader structural context.

### GENERAL DESCRIPTION

Reconstruction can be confounded by the fact that regions far away from the object's rotation axis (RA) are more likely to be viewed for less (i.e., fewer) times during the tomography. Thus, the reconstruction quality of those regions tends to have worse image quality than the regions close to the RA (see Zeng, Gengsheng Lawrence, Medical image reconstruction, Vol. 530, Heidelberg: Springer, 2001). However, for a misaligned system, the RA may not locate (i.e., be located) in the center of captured projection images, in which case, the region-of-interest (ROI) is off (i.e., away) from the optimal reconstruction region. In a worse scenario, which may often be present for high-resolution smaller field-of-view (FOV) systems, the RA of an unaligned system may not even be present in the projection images, in which case the ROI will move in-and-out of the optimal reconstruction region during the tomography scan, resulting in further degraded image quality for the reconstruction.

In general, there are three types of challenges to achieving high-quality, high-resolution tomography. (1) Reliably moving the ROI back to the center of the detector FOV for every projection. (2) Accurate estimation of the system geometry, which includes source position, detector position, detector orientation, and potentially optical distortion in the detection subsystem. (3) Characterizing the different estimated offsets for each individual projection view so that a sophisticated reconstruction algorithm can compensate for the different estimated offsets for each individual projection view.

According to one aspect of the disclosure, a method for performing computed tomography with an X-ray microscopy system is provided. The method comprises loading a high-contrast calibration object into a stage subsystem to measure and determine at least one of translation and orientation positioning parameters to compensate for stage runout, source drift, and source and/or detector misalignment by estimating positioning parameters, positioning an object of interest on a stage subsystem in an X-ray beam between an X-ray source subsystem and a detector, storing the positioning parameters in a per-view metadata set for the object of interest and reconstructing a three-dimensional representation of the object of interest from the per-view metadata and associated X-ray projections by incorporating the positioning parameters into tomographic reconstruction. In other words; the method for performing computed tomography with the X-ray microscopy system includes loading the high-contrast calibration object into the stage subsystem; and measuring and determining at least one of the translation and the orientation positioning parameter to compensate for stage runout, source drift of the X-ray source, and source and/or detector misalignment; and positioning the object of interest on the stage subsystem in the X-ray beam between the X-ray source subsystem and the detector; and storing the positioning parameters in the per-view metadata set for the object of interest; and tomographically reconstructing the three-dimensional representation of the object of interest from the per-view metadata set and associated X-ray projections based on the positioning parameters. In an embodiment, the stage runout may refer to a deviation of the sample stage's actual motion from its theoretical (and/or calculated) path during a motion such as a rotation or a translation. In other words; the stage runout may define a mechanical error that occurs when a rotation, translation or tilt of the stage is performed in the X-ray microscopy system.

In an embodiment, the method may further include defining a virtual rotational axis by selecting a location near the center of a detector field of view of the detector that remains substantially stationary relative to the detector across a range of rotational angles. Otherwise put; the virtual rotational axis may be defined by selecting the location near the center of the field of view of the detector.

In an embodiment, compensating for detector misalignment may involve estimating nine degrees of freedom for source and detector geometry, including three translational offsets for each of the source subsystem and the detector, and yaw, pitch, and roll angles of the detector, and using the degrees of freedom as global parameters that do not change with rotation angle of the object of interest.

In an embodiment, modeling and correcting optical distortions introduced by a two-stage detection subsystem may be employed, wherein the distortion is computed as a polynomial function of radial and tangential displacement in the detector plane and is used as a global parameter that does not change with rotation angle of the object of interest.

In an embodiment, the positioning parameters for each projection angle may be estimated by localizing the high-contrast calibration object (e.g., one or multiple small-sized steel microspheres, or a grid sample with high contrast corners) at multiple positions in the detector field of view and fitting a geometric model that accounts for stage runout, to yield angle-dependent positioning parameters. In other words; the positioning parameters for each projection angle are determined by localizing the high-contrast calibration object at multiple positions in the field of view of the detector and by fitting the geometric model that accounts for the stage runout. "Small-sized" is here defined as smaller than the FOV.

For example, global misalignments are preferably estimated by placing high-contrast calibration object(s) such as a microsphere for the nine degrees of freedom and a grid for the distortion. In specific examples, all of the sample, source, and detector are moved to multiple positions, but this is typically only performed at one angle, e.g., for theta=0.

The stage runout is preferably estimated by putting the high contrast object, e.g., the microsphere, on a compucentric rotational axis, or the rotational axis (if present in the field of view), and tracking it at different angles, such as possibly from -180 to 180, at 1 deg increments. Compucentric may here refer to an axis of rotation that is not necessarily a mechanical eucentric axis of the stage, but may be a virtual axis that may be estimated computationally.

A thermal drift of the source comes from temperature changes. In an embodiment, this is also estimated by tracking the position of high-contrast calibration object(s) as a function of temperature of the source as measured by a temperature sensor implemented in the source. In this case, the contemporaneous source temperature is saved as a per-view positioning parameter.

In an embodiment, reconstructing the three-dimensional representation preferably implements at least one reconstruction algorithm that uses the positioning parameters. In other words; the reconstructing of the 3D representation is a tomographic reconstruction.

In an embodiment, storing the positioning parameters in a per-view metadata set may further include recording time-dependent drift measurements and associating those measurements with corresponding projection views.

According to another aspect of the disclosure, a computed tomography X-ray microscopy system configured for high-resolution tomographic imaging under compucentric conditions is provided. This system comprises an X-ray source subsystem configured for generating an X-ray beam, a detector subsystem configured for capturing projection data, an object stage subsystem having a physical rotation axis for rotating an object of interest in the X-ray beam to generate the projection data, and at least one processor is configured for storing instructions that, when executed, cause the system to capture multiple calibration projections at different positions, to fit a geometric model of misalignments, and to reposition an object of interest at each angular position during scanning so that a virtual rotation axis remains substantially centered in said detector subsystem's field of view. In other words; the object of interest is repositioned at each angular position during scanning while keeping the virtual rotation axis substantially centered in the field of view of the detector subsystem. "Substantially centered" here refers to a configuration whereby the virtual rotation axis is, at least, closer to the center of the field of view than it is to the (outer) edges of the field of view.

The above and other features of the disclosure including various novel details of construction and combinations of parts, and other advantages, will now be more particularly described with reference to the accompanying drawings and pointed out in the claims. It will be understood that the particular method and device embodiments are shown by way of illustration and not as a limitation. The principles and features of this disclosure may be employed in various and numerous embodiments without departing from the scope.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the disclosure. Of the drawings:
Fig. 1 is a schematic diagram of an X-ray Microscopy (XRM) system, including the X-ray microscope, a computer, and several subsystems such as the X-ray source subsystem, object stage subsystem, detector subsystem, and a stable platform or base, according to an embodiment;
Fig. 2 is a flow diagram showing a method for a high resolution computed tomography method using a compucentric rotational axis, according to an embodiment;
Fig. 3 schematically illustrates geometry estimation used for creating high quality reconstruction, showing how the source and detector misalignment, as well as optical distortion can be estimated, according to an embodiment; and
Fig. 4 shows how a compucentric RA may be formed via coordinate transformation, according to an embodiment.

### DETAILED DESCRIPTION OF THE DRAWINGS

The disclosure now will be described more fully hereinafter with reference to the accompanying drawings, in which illustrative embodiments are shown. This disclosure may, however, be embodied in many different forms and should not be construed as limited to the embodiments set forth herein; rather, these embodiments are provided so that this disclosure will be thorough and complete, and will fully convey the scope to those skilled in the art.

As used herein, the term "and/or" includes any and all combinations of one or more of the associated listed items. Also, all conjunctions used are to be understood in the most inclusive sense possible. Thus, the word "or" should be understood as having the definition of a logical "or" rather than that of a logical "exclusive or" unless the context clearly necessitates otherwise. Further, the singular forms and the articles "a", "an" and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence or addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

It will be understood that although terms such as "first" and "second" are used herein to describe various elements, these elements should not be limited by these terms. These terms are only used to distinguish one element from another element. Thus, an element discussed below could be termed a second element, and similarly, a second element may be termed a first element without departing from the teachings.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

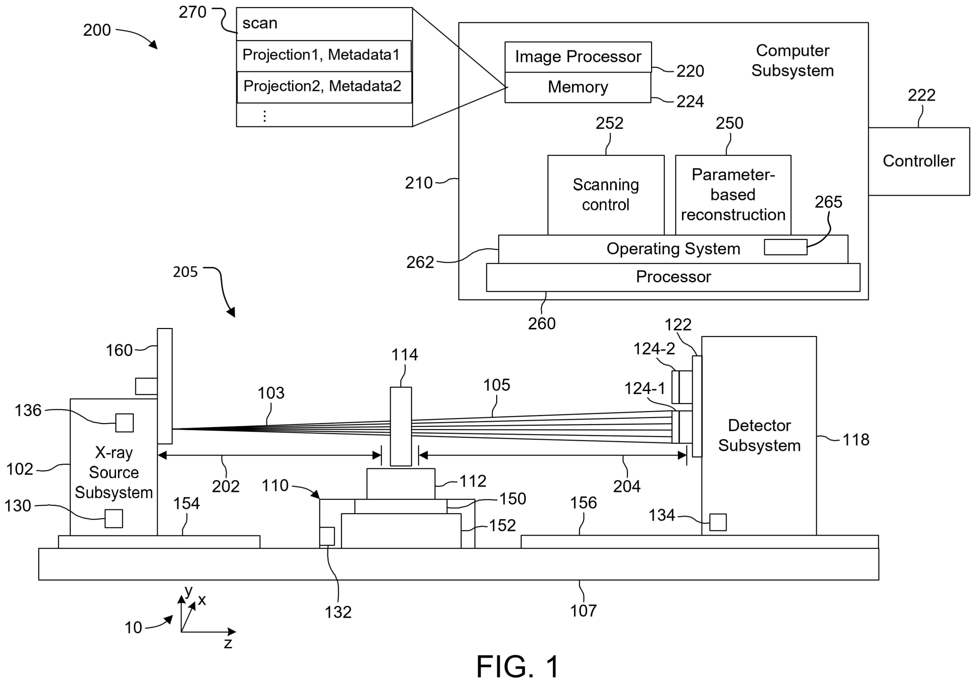

Fig. 1 is a schematic diagram of an X-ray microscopy (XRM) system 200 according to an embodiment of the present disclosure.

The XRM system 200 preferably includes an X-ray microscope 205 and a computer 210.

In the embodiment of Fig. 1, the illustrated X-ray microscope 205 is an X-ray computed tomography CT system and includes several subsystems. An X-ray source subsystem 102 generates a polychromatic or possibly monochromatic X-ray beam 103. An object stage subsystem 110 with object holder 112 holds a sample or object of interest 114 in the beam 103, 105 and positions and repositions it to enable scanning of the object of interest 114 in the stationary beam 103, 105. A detector subsystem 118 detects the beam 105 after it has been modulated by the object of interest 114. A base, such as a platform or optics table 107, provides a stable foundation for the microscopy system 200 and its subsystems.

In an embodiment, the object stage subsystem 110 has the ability to position and rotate the object of interest 114 in the beam 103. Thus, the object stage subsystem 110 will typically include compound linear and rotation stages. The illustrated example has a precision 3-axis compound stage 150 that translates and positions the object of interest 114 along the x, y, and z axes, very precisely but only over relatively small ranges of travel. This allows a region of interest of the object 114 to be located within the beam 103,105. The 3-axis compound stage 150 is mounted on a theta stage 152 that rotates the 3-axis compound stage 150 and thus object of interest 114 in the beam 103, 105 around the y-axis. The theta stage 152 is in turn mounted on the base 107. Thus, with this arrangement, the frame of reference or coordinate system of the 3-axis compound stage 150 is related to the frame of reference or coordinate system 10 of the microscopy system 200 by the current angular position of the theta stage 152.

In an example, a five-axis compensated stage as described in U.S. Pat. No. 7,535,193 is used as the stage 110.

In this embodiment of the system 200, the motor encoder readouts for the lateral positions (x and z axes in Fig. 1) are accurate, or more accurate/precise than the resolution of the imaging system. For a high magnification system, this means <500 nm, otherwise this will impact the resolution of the reconstruction.

The source subsystem 102 will typically be either a synchrotron X-ray radiation source or alternatively a "laboratory X-ray source" in some embodiments.

As used herein, a "laboratory X-ray source" is any suitable source of X-rays that is not a synchrotron X-ray radiation source. Laboratory X-ray source 102 can be an X-ray tube, in which electrons are accelerated in a vacuum by an electric field and shot into a target piece of metal, with X-rays being emitted as the electrons decelerate in the metal. Typically, such sources produce a continuous spectrum of background X-rays combined with sharp peaks in intensity at certain energies that derive from the characteristic lines of the selected target, depending on the type of metal target used.

In one example, source subsystem 102 is a rotating anode type or microfocused source, with a tungsten target. Targets that include molybdenum, gold, platinum, silver or copper also can be employed. Preferably a transmission target configuration is used in which the electron beam strikes the thin target from its backside. The X-rays emitted from the other side of the target are used as the beam 103.

The X-ray beam 103 generated by source subsystem 102 is often conditioned to suppress unwanted energies or wavelengths of radiation. For example, undesired wavelengths present in the beam 103 are eliminated or attenuated, using, for instance, energy filters (designed to select a desired X-ray energy range (bandwidth)) held in a filter wheel 160. These energy filters typically include an 'air' filter corresponding to no filter along with a set of low energy filters for filtering lower energy X-rays and high energy filters for filtering higher energy X-rays.

When the object 114 is exposed to the X-ray beam 103, the X-ray photons, which propagate through the object of interest 114, form a modulated beam 105 that is received by the detector subsystem 118. In some examples, an objective lens is used to form an image onto the detector subsystem 118 of the microscopy system 200.

Typically, a magnified projection image of the object 114 is formed on the detector subsystem 118. The magnification of the X-ray stage is equal to the inverse ratio of the source-to-object distance 202 and the source-to-detector distance 204.

To achieve high resolution, an embodiment of the X-ray CT system 200 further utilizes a very high resolution, two stage, detector 124-1 of the detector subsystem 118 possibly in conjunction with positioning the object of interest 114 close to the X-ray source system 102. The high-resolution detector 124-1 includes a scintillator in conjunction with a microscope objective and tube lens to provide additional optical magnification in a range between 2x (twofold) and 100x (hundredfold), or more, in addition to X-ray magnification. The scintillator converts the X-rays into an optical image that is further magnified in that can be detected by a camera. One example is described in U.S. Pat. No. 7,297,959, which can be included herein.

In various embodiments, other detectors are included as part of the detector subsystem 118. For example, the detector subsystem 118 can include a lower resolution detector 124-2. This could be a flat panel detector and camera or a detector with a lower magnification microscope objective, in examples. Configurations of one, two, or even more detectors 124 of the detector subsystem 118 are possible.

Preferably, two or more detectors 124-1, 124-2 are mounted on a turret 122 of the detector subsystem 118, so that they can be alternately rotated into the path of the modulated beam 105 from the object of interest 114.

In an embodiment, the source subsystem 102 and the detector subsystem 118 are mounted on respective z-axis stages. In the illustrated example, the source subsystem 102 is mounted to the base 107 via a source stage 154, and the detector subsystem 118 is mounted to the base 107 via a detector stage 156. In practice, the source stage 154 and the detector stage 156 are lower precision, high travel-range stages that allow the source subsystem 102 and the detector subsystem 118 to be moved into position, often very close to the object 114 during scanning and then to be retracted to allow the object 114 to be removed from, a new object 114 to be loaded onto, and/or the object 114 to be repositioned on the object holder 112 of the object stage subsystem 110.

The operation of the microscopy system 200 and the scanning of the object 114 is controlled by the computer 210 that preferably includes an image processor 220, a controller 222, and memory 224.

In an embodiment, the computer 210 includes one or more processors 260 along with their data storage resources such as disc or solid-state drives, and dynamic memory 265. The processors 260 are configured to execute an operating system 262 and various applications to run on that operating system 262 to allow for user control and operation of the microscopy system 200. Particularly, a scanning control application 252 executes on the operating system 262 to control the microscope 205 to perform scans of the object of interest 114. The resulting projections are then reconstructed into a volume representation of the object of interest 114 using a reconstruction application 250. Preferably, the reconstruction application 250 is configured to perform the reconstruction for each of the projections in the scan by incorporating positioning parameters and varying magnifications due to relative movement between the source subsystem 102, object of interest 114, and detector subsystem 118.

In an embodiment, the controller 222 may be configured to allow the computer subsystem 210 to control and manage components in the X-ray CT microscope 200 under software control. The controller might be a separate computer system adapted to handle real-time operations or an application program executing on the processor 260. For this purpose, the source subsystem 102 includes a control interface 130 allowing for its control and monitoring by the controller 222. In particular, the X-ray source system 102 includes a temperature sensor 136 that allows the controller 222 to track the source's temperature and to save this information as parameter information for each projection. Similarly, the object stage subsystem 110 and the detector subsystem 118 have respective control interfaces 132, 134 for allowing for their control and monitoring by the computer 210 via the controller 222.

To configure the microscopy system 200 to scan the object of interest 114 and to adjust other parameters such as the geometrical magnification, the scanning control application 252 adjusts the source-to-object distance 202 and the source-to-detector distance 204 by respective operation of the source stage 154 and detector stage 156 to achieve the desired scanning setup.

Specifically, the source stage 154 and detector stage 156 include respective motor encoder systems or other actuator systems that are configured to allow the computer 210 via the controller 222 to position the respective X-ray source subsystem 102 and the detector subsystem 118 to specified positions via the control interfaces 130, 134. Further, the source stage 154 and detector stage 156 signal the controller 222 of their actual positions.

In an embodiment, the scanning control application 252 operates the object stage subsystem 110 to perform the CT scan via the controller 222 and the control interfaces 130, 132, 134. Typically, the object stage subsystem 110 will position the object 114 by rotating the object 114 about the y-axis that is orthogonal to the optical axis of the X-ray beam 103, 105 by controlling the theta stage 152 and/or position the object of interest 114 in the x, y, z axes directions using x, y, z precision compound stage 150. The scanning control application 252 saves the scan 270 with projection data from the detector subsystem 118 along with the position of the X-ray source subsystem 102, the detector subsystem 118 and most importantly the positions of the x, y, z stages of the compound stage 150 and the theta stage 152. This information is saved to the memory 224. In more detail, the scan data 270 includes a record for each projection (e.g., Projection1, Projection2, ... ) generated by the detector subsystem 118. Each of those records includes the spatially resolved image and further includes associated metadata of the stages' positions. Thus, Metadata1, Metadata2... includes the positions of the x, y, z stages of the compound stage 150 and the theta stage 152 associated with each Projection1, Projection2, .... In addition, preferably the metadata also includes the temperature of the source as measured by a temperature detector (e.g., the temperature sensor 136) of the X-ray source system 102 and as read out by the controller 222.

In an embodiment, the scan data 270 also further includes the acquisition parameters such as X-ray source voltage settings that help to determine the X-ray energy spectrum and exposure time and number of frames on the X-ray source subsystem 102. Other settings such as the field of view of the X-ray beam 103 incident upon the object of interest 114, the number of X-ray projection images to create for the object of interest 114, and the detector 124-1, 124-2 selected are also stored in the scan data 270. Generally, the acquisition parameters include X-ray source voltage, X-ray source filtration, camera exposure time, number of frames, and overall number of projections. In addition, the source-to-object distance 202 and the source-to-detector distance 204 are preferably stored.

In some embodiments, the computer subsystem 102 employs or creates a 'virtual rotation axis' to keep the region of interest (ROI) of the object of interest 114 centered in the field of view of the detector 124 at every angle of the tomographic scan. Specifically, if the rotation axis in the world coordinate frame is ***w**ᵣ =* (*x_{w,r,} y_{w,r}*)*,* but the desired virtual axis lies at ***w**_{c} =* (*x_{w,c}, y_{w,c}*)*,* the system 200 uses the three axis stage 150 of the stage subsystem 110, including possibly linear stages on top of the rotation stage 152, if available, to reposition the object of interest 114 according to ${s}_{c}^{θ} = {R}_{- θ} \left({w}_{c}-{w}_{r}\right) ,$ where ***R***_{-*θ*} is the rotational matrix along -*θ* position, ${R}_{- θ} = \left(\begin{matrix}cos θ & sin θ \\ - sin θ & cos θ\end{matrix}\right) .$

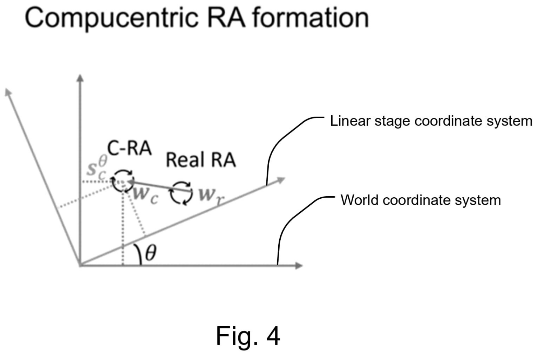

As schematically illustrated in Fig. 4, because real-world stages are not infinitely precise, a small offset ${s}_{c}^{θ} = {R}_{- θ} \left({w}_{c}-{w}_{r}\right) + {ϵ}^{θ}$ often remains. However, once measured, this offset is logged in the scan data in the metadata for each projection to be numerically compensated for in the reconstruction executed by the reconstruction application 250 by incorporating positioning parameters and varying magnifications, producing compucentric conditions with the ROI effectively 'locked' at the center of the detector field of view.

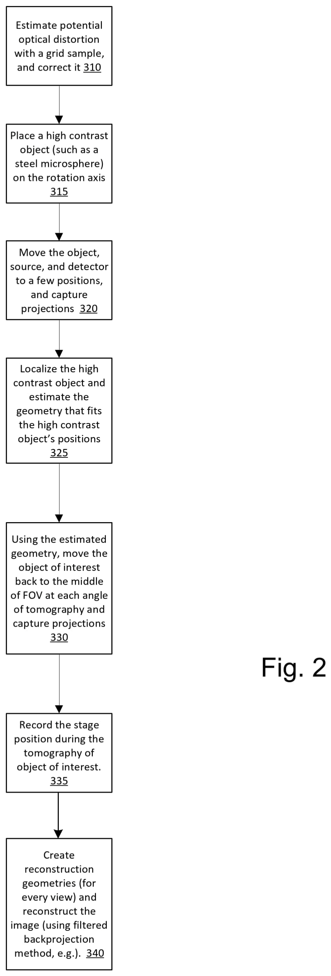

Fig. 2 is a flow diagram describing a high resolution computed tomography method using a compucentric rotational axis according to an embodiment of the present disclosure.

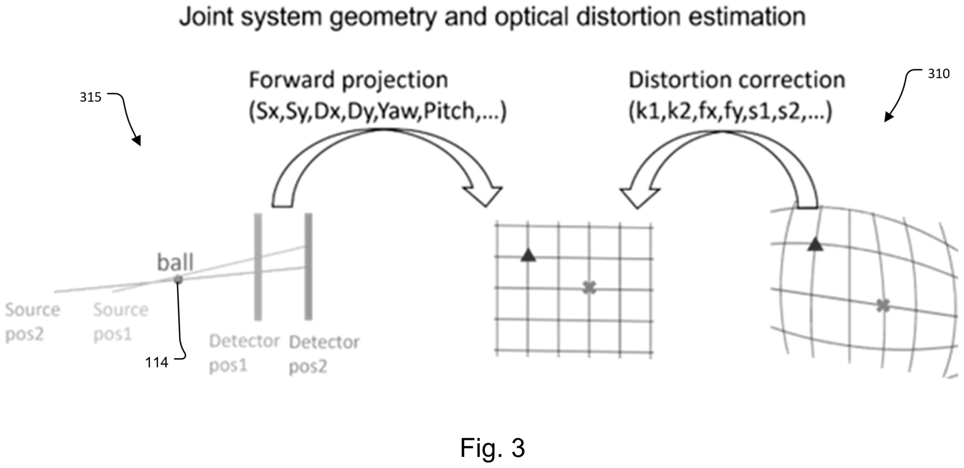

In step 310, the system uses a known grid sample, such as a precision reticle or test chart, to estimate and correct potential optical distortion within the detection path. The grid sample provides regularly spaced features whose true positions are known in advance. By capturing one or more projections of this grid in the detector's field of view, the system 200 can compare the measured positions of grid features to their known ideal locations. Any deviations are then fit to a distortion model-often a polynomial function describing radial or tangential distortion in the lens or camera subsystem. More specifically, the distortion model is especially helpful when using the high-resolution detector 124-1, which includes the scintillator, microscope objective and tube lens. The distortion model will cover this optical train, especially when high optical magnifications are used. These polynomial coefficients are stored as part of the detector calibration. Subsequently, when the system acquires tomographic data, the image signals are remapped using the calculated distortion model to ensure that each detected point is placed at its true location on the virtual imaging plane. This preliminary correction reduces errors that might otherwise confound later geometry estimations and reconstructions. This is schematically shown on the right side of Fig. 3.

In step 315, a small, high contrast object such as a steel microsphere is loaded into the object holder 112 and aligned at or near the system's physical rotation axis, the axis of the theta stage 152 of the object stage subsystem 110, to provide a reliable calibration reference. Because the sphere appears as a well-defined bright feature in X-ray projections, it is ideally suited for detecting even small deviations in the system geometry.

Although a small steel sphere is an effective calibration object due to its well-defined, high-contrast edges, other configurations can be used providing they have a well-defined shape such that its location can be resolved to high accuracy and precision when imaged from any angle. For instance, a multi-bead phantom containing multiple microspheres at different known positions provides a more spatially distributed reference, helping to detect and correct for localized distortions. Precision-manufactured metal patterns, such as a periodic wire grid, checkerboard (Zhang, Zhengyou, "A flexible new technique for camera calibration.", IEEE Transactions on pattern analysis and machine intelligence, 22.11 (2002), 1330-1334), circleboard (Heikkila, Janne, and Olli Silvén, "A four-step camera calibration procedure with implicit image correction.", Proceedings of IEEE computer society conference on computer vision and pattern recognition, IEEE, 1997), and PuzzleBoard (Stelldinger, Peer, Nils Schönherr, and Justus Biermann, "PuzzleBoard: A New Camera Calibration Pattern with Position Encoding.", arXiv preprint, arXiv:2409.20127 (2024)), in embodiments, can also serve as calibration standards, particularly if they include sharp boundaries or regular patterns that simplify feature localization in each projection. Certain grid or reticle targets, while typically used for distortion correction, can be repurposed to estimate system geometry parameters by precisely identifying the grid's intersection points in the detector plane. These alternatives offer flexibility in matching the calibration object to the specific resolution and field-of-view needs of a given X-ray microscopy system 200.

The high contrast object is carefully mounted on the object stage subsystem 110 so that it is centered as closely as possible to the rotational axis in the world coordinate frame of the microscope 205. In practice, the operator may use the x, y, z linear stages of the compound stage 150 and the theta stage 152 (or as described, for example, in U.S. Patent No. 7,535,193) to iteratively adjust the position of the microsphere until the system's initial projection shows the sphere approximately at the center of the field of view. This initial positioning is essential for subsequent geometry estimation: even slight misplacements can introduce errors into the data that propagate through the tomography. By beginning with the high contrast object at a position well-characterized in the coordinate system, the calibration steps and geometry-fitting processes described later can accurately capture the system's misalignments, including beamline divergence, detector orientation, and optical distortions, and then compensate for them during the tomographic reconstruction. This is graphically shown on the left side of Fig. 3 showing the ball object with different source and detector positions.

In step 320 of Fig. 2 and also with continued reference to the left side of Fig. 3, the high contrast object-such as the steel microsphere-along with the X-ray source subsystem 102 and detector subsystem 118 are systematically moved through a small set of distinct positions by control of the computer subsystem 210 to capture multiple projection images of the high contrast object. Since the position of the rotational axis of the theta stage 152 may not coincide exactly with the optical axis or the center of the field of view of the selected detector 124, these movements help expose any global misalignments in the system geometry and allow the calibration procedure to detect them. Often, this step occurs with the theta stage (rotation stage) 152 at a set angle such as theta=0.

In addition, the stage runout is estimated by continuing to image the high contrast object on a compucentric rotational axis, or the rotational axis (if present in the FOV), and it is tracked at different angles, such as from -180 to 180 degrees, at 1 degree increments. At each position, the high contrast object is placed in a slightly different location relative to both the source subsystem 102 and the detector 124. The system records the resulting X-ray projections, which highlight the object's high contrast edges and thus make it easier to identify the sphere's exact coordinates in each projection. These data points provide insight into stage runout. By capturing these projections at several well-chosen positions, the geometry is accurately estimated in the subsequent fitting steps performed by the computer subsystem 210, ensuring that the final tomographic reconstruction accounts for system misalignments and specifically stage runout.

In addition, the thermal drift of source 102 comes from temperature changes. This is also estimated by tracking the position of the high contrast object - such as the steel microsphere - as a function of temperature of the source and readout by the temperature detector integrated in the source 102 by the controller 222, such as the temperature sensor 136.

In summary, the source/detector translational/rotational misalignment (9 degrees of freedom), and lens distortion are "global" misalignments, that are the same for all rotational angles and temperatures. The stage runout, source (thermal) drift, on the other hand, may depend on the rotation angle and/or the temperature change during the scan.

In step 325, the computer subsystem 210 identifies the location of the high contrast object - such as steel microsphere - in each captured projection and then uses these positional measurements to fit a geometric model that describes the system's mechanical and optical distortions. This can be achieved by, e.g., using a voxel-driven forward projector (Kachelriess, Marc, Michael Knaup, and Olivier Bockenbach, "Hyperfast parallel-beam and cone-beam backprojection using the cell general purpose hardware.", Medical Physics 34.4 (2007)) implemented with an auto-differentiable language and/or library like Pytorch (Paszke, Adam, et al. "Pytorch: An imperative style, high-performance deep learning library.", Advances in neural information processing systems 32 (2019).), Jax (Bradbury, James, et al. "Jax: Autograd and xla.", Astrophysics Source Code Library (2021): ascl-2111.), and Tensorflow (Abadi, Martin, et al. "{TensorFlow}: a system for {Large-Scale} machine learning." 12th USENIX symposium on operating systems design and implementation (OSDI 16). 2016.), but other estimation methods can be used. The core task is to track the object's (sphere's) exact center point in every projection image taken in step 320. By precisely measuring where the object (sphere) appears within each projection image, the system 200 can relate those positions to the known or measured displacements of the source subsystem 102, detector 124, and rotational theta stage 152 of the stage subsystem 110. In other words, the computer subsystem 210 determines how the small high contrast object (sphere) is shifted in the image plane relative to the nominal center of the detector 124, and how that shift correlates with the physical movements imparted by the system 200. With these data points, a fitting routine (often implemented in a differentiable framework such as PyTorch or TensorFlow) executed by the computer subsystem 210 estimates a full set of system parameters-such as the source position, detector orientation, and optical distortion polynomials-that align all of the recorded high contrast object (sphere) positions in a self-consistent geometric model. As a result, even if the rotational axis is off-center or the detector plane is tilted, the computer subsystem 210 obtains corrected geometry parameters that accurately describe the real-world positions of the source subsystem 102, object 114, and detector 124 for every projection view. This step creates the estimated geometry parameters that bridge raw images of the calibration object to a mathematically precise representation of how the X-ray microscope 205 is actually configured.

It should be noted that even if the ROI is placed on the virtual rotation axis, the X-ray microscope may remain misaligned in other ways. These misalignments can be modeled with nine degrees-of- freedom, including three translational offsets each for the source and the detector (i.e., six in total for the source and the detector), as well as the detector's yaw, pitch, and roll (additional three for a total of nine). In dual-stage detection systems that use an objective lens for additional magnification, optical distortions (often radial or tangential) can further shift the apparent position of features in each projection. Since these distortions remain independent of the source-to-object 202 or source-to-detector distance, the system 200 can estimate them by fitting polynomial functions to the apparent distortion field across multiple calibration positions.

For two-stage detection systems, the projector model includes an additional mapping from the scintillator plane to the visible-light detector plane. The system 200 uses a differentiable approach (e.g., implemented in frameworks such as PyTorch or TensorFlow) to jointly optimize the geometric degrees-of-freedom and the coefficients of distortion polynomials. This helps isolate purely geometric misalignments (such as the beamline not being parallel to stage rails) from lens-driven distortion.

In step 330, the high contrast calibration object/sphere is removed (or set aside) and replaced with the actual object of interest to be imaged. Using the geometry or positioning parameters extracted in the previous calibration steps, the system ensures that the object of interest is always positioned at or near the optimal imaging area of the detector 124. Specifically, at each angular position in the tomography scan, the computer subsystem 210 applies the corrected motion instructions derived from the virtual rotation axis creation and geometry fitting procedures. In practice, this can mean shifting the object 114 slightly along the x-y-z linear stages to account for stage runout or misalignment so that the region of interest remains centered in the field of view. Because the system 200 now has an accurate model of the source's and detector's positions (as well as any lens distortions), every projection is captured under effectively "compucentric" conditions, where the rotation axis appears to remain stable in the detector's image space. This approach has the advantageous technical effect in that it maximizes resolution and minimizes artifacts, especially in regions of the object of interest 114 that otherwise might drift out of the detector's optimal imaging zone if (when) only the raw physical rotation axis were used without correction. Otherwise (else); when using the correction, the object of interest 114 might not drift out of the detector's optimal imaging zone.

Although the linear and rotational stages have precise encoders, a small but consistent 'runout' can cause the sample 114 to deviate by a predictable offset at each projection angle. Additionally, thermal effects and electron-beam instabilities can cause minor drifts in the X-ray source position over longer scans. The system addresses these by recording the reference scans of the high-contrast object/sphere, registering them against longer scans to calculate any transient displacements, and then compensating for these shifts in the final reconstruction.

In step 335, the computer subsystem 210 continuously tracks and logs the precise positions of the linear and rotational stages during the tomography scan of the object of interest 114. This tracking involves reading out the encoder values (or other position sensors) for each axis at every projection angle and storing the positioning parameters as Metadata with each Projection. Because the geometry corrections determined earlier include compensating for stage runout and other misalignments, the recorded positioning parameters serve two purposes: first, to verify that the object of interest 114 is consistently re-centered as planned, and second, to provide each projection with an accurate record of the physical position of the stage at the exact time of image capture. These metadata positioning parameters become part of the final scan dataset 270 and feed directly into the reconstruction algorithm, which has the technical benefit of ensuring that each view is associated with a description of how the object of interest 114 was located relative to the source subsystem 102 and detector 124.

In step 340, the computer subsystem 210 uses the recorded positioning parameters of the metadata for each projection to create an accurate, per-view reconstruction setup and then carries out the actual volumetric reconstruction (for example, using filtered backprojection). Because real-world misalignments and thermal drifts cause the rotational axis to deviate slightly from a perfect circular trajectory, each projection ends up having its own unique relationship between the source subsystem 102, object of interest, and detector 124. Hence, rather than relying on a single global model, the system 200 compiles a precise geometry description for each captured projection as positioning parameters. This description typically includes parameters such as the source's relative position, the detector's orientation, and any offset introduced by the stage movement, enabling the reconstruction algorithm to account for every subtle shift in the data.

Once these positioning parameters are assigned to each view, a reconstruction routine-often a method like filtered backprojection (FBP) or a more advanced iterative algorithm-processes the full set of projections. By incorporating the corrected geometry on a per-view basis, artifacts and blurring caused by mechanical imperfections are minimized in the final 3D volume. In effect, each image is properly registered in "compucentric" space, so the reconstructed volume shows the object of interest with substantially improved resolution and fewer distortions.

Because each projection may have its own slight deviations from an ideal geometry, the system 200 formulates a per-view geometry description that includes up to twelve parameters (e.g., source position, detector position, detector orientation, and the net offset of the sample). A so-called 'general purpose reconstructor,' e.g., Kachelriess, Marc, Michael Knaup, and Olivier Bockenbach., "Hyperfast parallel-beam and cone-beam backprojection using the cell general purpose hardware.", Medical Physics, 34.4 (2007), 1474-1486, then processes these per-view geometries, either using filtered backprojection or a more sophisticated iterative algorithm, to produce a final 3D volume with minimized artifacts. By not assuming a strictly circular scan path, the method has the beneficial technical effect of accommodating real-world imperfections, yielding superior resolution, especially for misaligned systems or scans performed over extended periods.

Although this workflow is demonstrated with a cone-beam, two-stage detection X-ray system, the same principles may be applied to direct flat-panel detectors or even parallel-beam geometries. In parallel-beam or C-Arm systems, the per-view geometry description can be adapted by omitting source spot localization or adjusting the known geometry constraints. Similarly, if the system lacks second-stage optical magnification, one simply sets the distortion model to unity, eliminating the polynomial lens term.

While this disclosure has been particularly shown and described with references to preferred embodiments thereof, it will be understood by those skilled in the art that various changes in form and details may be made therein without departing from the scope encompassed by the appended claims.

### List of reference signs

- 10: Frame of reference or coordinate system
- 102: X-ray source subsystem
- 103, 105: X-ray beam
- 107: Base
- 110: Object stage subsystem
- 112: Object holder
- 114: Object
- 118: Detector subsystem
- 122: Turret
- 124: Detector
- 124-1: High-resolution detector
- 124-2: Lower resolution detector
- 130: X-ray source subsystem control interface
- 132: Object stage subsystem control interface
- 134: Detector subsystem control interface
- 136: Temperature sensor
- 150: Three-axis compound stage
- 152: Theta stage
- 154: Source stage
- 156: Detector stage
- 160: Filter wheel
- 200: Microscopy system
- 202: Source-to-object distance
- 204: Source-to-detector distance
- 205: X-ray microscope
- 210: Computer subsystem
- 220: Image processor
- 222: Controller
- 224: Memory
- 250: Parameter-based reconstruction application
- 252: Scanning control application
- 260: Processor
- 262: Operating system
- 265: Dynamic memory
- 270: Scan data
- 310: Distortion correction step
- 315: Object loading and alignment step

## Claims

1. A method for performing computed tomography with an X-ray microscopy system (200), the method comprising:
loading a high-contrast calibration object into a stage subsystem (110);
measuring and determining at least one of a translation and an orientation positioning parameter to compensate for stage runout, drift of an X-ray source (102), and source (102) and/or detector (124) misalignment;
positioning an object of interest (114) on the stage subsystem (110) in an X-ray beam (103, 105) between the X-ray source subsystem (102) and the detector (124);
storing the positioning parameters in a per-view metadata set for the object of interest (114); and
tomographically reconstructing a three-dimensional representation of the object of interest (114) from the per-view metadata set and associated X-ray projections based on the positioning parameters.

2. The method of claim 1, further comprising defining a virtual rotational axis by selecting a location near the center of the field of view of the detector (124, 124-1, 124-2) that remains substantially stationary relative to the detector (124, 124-1, 124-2) across a range of rotational angles.

3. The method of claim 1, wherein compensating for detector (124) misalignment comprises estimating nine degrees of freedom for the source (102) and the detector (124) geometry, the degrees of freedom including three translational offsets for each of the source subsystem (102) and the detector (124), and yaw, pitch and roll angles of the detector (124), wherein the degrees of freedom are used as global parameters that do not change with rotation angle of the object of interest (114).

4. The method of claim 1, further comprising modeling and correcting optical distortions, wherein the distortion is computed as a polynomial function of radial and tangential displacement in the detector (124) plane and is used as a global parameter that does not change with rotation angle of the object of interest (114).

5. The method of claim 1, wherein the positioning parameters for each projection angle are determined by localizing the high-contrast calibration object at multiple positions in the detector (124) field of view and fitting a geometric model that accounts for the stage runout.

6. The method of claim 1, wherein the positioning parameters for source temperature are saved during the scan based on a temperature of the source (102).

7. The method of claim 1, wherein tomographically reconstructing the three-dimensional representation comprises implementing at least one reconstruction algorithm that uses the translation and the orientation positioning parameters.

8. The method of claim 1, wherein storing the positioning parameters in the per-view metadata set further comprises recording time-dependent drift measurements and associating those measurements with corresponding projection views.

9. A computed tomography X-ray microscopy system (200) configured for high-resolution tomographic imaging under compucentric conditions, the system (200) comprising:
an X-ray source subsystem (102) configured for generating an X-ray beam (103, 105);
a detector subsystem (118) configured for capturing projection data;
object stage subsystem (110) comprising a physical rotation axis for rotating an object of interest (114) in the X-ray beam (103, 105) to generate the projection data; and
at least one processor (260) configured for storing instructions that, when executed, cause the system (200) to capture multiple calibration projections at different positions, to fit a geometric model of misalignments, and to reposition the object of interest (114) at each angular position during scanning while keeping a virtual rotation axis substantially centered in the field of view of the detector subsystem (118).

10. The system (200) of claim 9, wherein the geometric model of misalignments comprises at least nine degrees of freedom, comprising three translational offsets for both the X-ray source subsystem (102) and the detector subsystem (118), and three orientational offsets for the detector subsystem (118), which are used as global parameters that do not change with the rotation angle of the object of interest (114).

11. The system (200) of claim 9, wherein the detector subsystem (118) includes a two-stage detector (124) comprising a scintillator and an optical magnification lens, and wherein the at least one processor (260) is configured to estimate and compensate for optical distortions arising in the detector (124).

12. The system (200) of claim 9, wherein the object stage subsystem (110) is further configured with x-y-z linear stages disposed on the physical rotation axis, the stages being configured for repositioning of the object of interest (114) such that the virtual rotation axis remains within a high-resolution portion of the field of view of the detector (124).

13. The system (200) of claim 9, wherein the at least one processor (260) is configured to record runout data for each projection angle, wherein the runout data represent a lateral displacement of the object of interest (114) resulting from imperfections in the physical rotation axis.

14. The system (200) of claim 9, wherein the at least one processor (260) is configured to apply a per-view geometry descriptor to each captured projection, such that each view is associated with specific translation and orientation parameters that are used to generate a three-dimensional reconstruction of the object of interest (114).

15. The system (200) of claim 9, wherein the system (200) further comprises a reference calibration object, and the at least one processor (260) is configured to acquire a calibration scan of said reference calibration object to derive the geometric model of misalignments before scanning the object of interest (114).
